# NEUE EUROPÄISCHE PATENTSCHRIFT

(11) **EP 3 103 655 B2**
(45) Veröffentlichungstag und Bekanntmachung des Hinweises auf die Entscheidung über den Einspruch: **04.01.2023**
(45) Hinweis auf die Patenterteilung: 18.07.2018
(21) Anmeldenummer: 16169822.0
(22) Anmeldetag: 17.05.2016
(51) Int. Cl.: B60C 1/00, C08F 36/06, C08C 19/25, C08K 3/36, C08L 7/00, B60C 11/00

(54) **KAUTSCHUKMISCHUNG UND FAHRZEUGREIFEN**
RUBBER COMPOSITION AND VEHICLE TYRE
MÉLANGE DE CAOUTCHOUC ET PNEU DE VEHICULE

(30) Priorität: 08.06.2015 DE 102015210421
(43) Veröffentlichungstag der Anmeldung: 14.12.2016
(73) Patentinhaber: Continental Reifen Deutschland GmbH, 30165 Hannover (DE)
(72) Erfinder: Weber, Christian, 30826 Garbsen (DE)
(74) Vertreter: Pelster Behrends Patentanwälte PartG mbB

(56) Entgegenhaltungen:
- EP-A1- 1 013 710
- EP-A1- 1 529 806
- EP-A1- 2 065 221
- EP-A1- 2 082 899
- EP-A1- 2 345 696
- EP-A1- 2 594 414
- EP-A1- 2 716 703
- EP-A2- 2 174 801
- WO-A1-2016/180649
- JP-A- 2005 350 603
- JP-A- 2010 254 858
- JP-A- 2015 086 280
- US-A1- 2002 082 333
- US-A1- 2002 082 333
- US-A1- 2009 306 269
- US-A1- 2014 121 316

## Beschreibung

Die Erfindung betrifft eine schwefelvernetzbare Kautschukmischung, insbesondere für die Base von Laufstreifen mit Cap/Base-Konstruktion von Fahrzeugreifen, und einen Fahrzeugreifen.

Da die Fahreigenschaften eines Fahrzeugreifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. Hierbei bestehen nicht nur bei dem mit der Fahrbahn in Berührung kommenden Teil des Laufstreifens (Cap) Zielkonflikte, sondern auch bei der Base, welche über das gesamte Reifenleben idealerweise nicht oder nur am Ende des Reifenlebens mit der Fahrbahn in Kontakt kommt.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1052270 A sind z. B. Laufstreifenmischungen auf Basis von Ruß als Füllstoff bekannt, die für einen guten Griff auf Eis unter anderem ein flüssiges Polymer, z. B. Polybutadien, enthalten.
Aus der DE 3804908 A1 sind ebenfalls Laufstreifenmischungen auf Basis von Ruß als Füllstoff bekannt, die für gute Wintereigenschaften flüssiges Polybutadien enthalten.
Flüssiges Polybutadien mit hohem Vinylgehalt und einer hohen Glasübergangstemperatur (T_{g}) wird in der EP 1035164 A für Reifenlaufstreifen als Ersatz für herkömmliche Weichmacheröle vorgeschlagen.

Die Verwendung von flüssigem Polybutadien in herkömmlichen Mischungen wirkt sich allerdings sehr negativ auf das Trockenbremsen und Trockenhandling von Reifen aus.

Die DE 102008058996 A1 und die DE102008058991 A1 offenbaren als Ersatz für übliche Weichmacheröle endständig amin-modifizierte flüssige Polybutadiene bzw. carboxyl-endständig modifizierte flüssige Polybutadiene in Laufstreifenmischungen mit einer hohen Menge an Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleißfestigkeit auszeichnen.

Die EP 2060604 B1 offenbart eine Kautschukmischung enthaltend ein funktionalisiertes Polymer mit einem Mw von 20000 g/mol sowie Ruß als Füllstoff in Kombination mit 60 phr Naturkautschuk.

In der US 20020082333 A1 wird zur Verbesserung der Prozessierbarkeit ein mit Triethoxysilan modifiziertes Polybutadien anstelle eines Silans in einer NR-freien Kautschukmischung auf Basis von Synthesekautschuk und Kieselsäure als Füllstoff eingesetzt.

Der vorliegenden Erfindung liegt nun die Aufgabe zugrunde, eine schwefelvernetzbare Kautschukmischung bereitzustellen, die eine Verbesserung gegenüber dem Stand der Technik im Hinblick auf den Zielkonflikt aus Rollwiderstand und Reißeigenschaften und einer guten Verarbeitbarkeit aufweist. Gelöst wird diese Aufgabe durch eine schwefelvernetzbare Kautschukmischung enthaltend:
- 70 bis 100 phr zumindest eines natürlichen und/oder synthetischen Polyisoprens und
- 20 bis 90 phr zumindest einer Kieselsäure und
- 1 bis 35 phr zumindest eines flüssigen Polybutadiens, welches endständig organosilicium-modifiziert ist, und ein Gewichtsmittel Mw des Molekulargewichts gemäß GPC von 500 bis 12000 g/mol aufweist, und
- 0,5 bis 8 phr zumindest eines Klebharzes.

Eine weitere Aufgabe, die der vorliegenden Erfindung zugrunde liegt, besteht darin einen Fahrzeugreifen bereitzustellen, der einen geringeren (und damit verbesserten) Rollwiderstand bei gleicher oder besserer struktureller Haltbarkeit im Hinblick auf die Reißeigenschaften aufweist.

Gelöst wird die Aufgabe dadurch, dass der Fahrzeugreifen in wenigstens einem Bauteil wenigstens ein Vulkanisat wenigstens einer schwefelvernetzbaren Kautschukmischung mit oben genannten Merkmalen aufweist. Bevorzugt weist der Fahrzeugreifen die Kautschukmischung wenigstens in der Base eines Laufstreifens mit einer Cap/Base-Konstruktion auf. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap).
Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen. Das erfindungsgemäß enthaltene Polybutadien mit einem Mw von 500 bis 12000 g/mol geht daher nicht als Kautschuk in die hundert Teile der phr-Berechnung ein.

Die Bestimmung des Gewichtsmittels Mw und des Zahlenmittels Mn des Molekulargewichtes der Polymere erfolgt mittels Gelpermeationschromatographie (GPC mit Tetrahydrofuran (THF) als Elutionsmittel bei 40 °C, Apparat PPS, kalibriert mit Polystyrol-Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts verwendet.

Erfindungswesentlich enthält die schwefelvernetzbare Kautschukmischung wenigstens ein flüssiges Polybutadien, welches endständig organosilicium-modifiziert ist und ein Gewichtsmittel Mw des Molekulargewichts gemäß GPC von 500 bis 12000 g/mol aufweist. Hierbei beinhaltet der Wertebereich des Mw, dass es sich bei Raumtemperatur um ein flüssiges Polybutadien handelt. Der Einfachheit halber wird deshalb im Rahmen der vorliegenden Erfindung auch der kurze Ausdruck "flüssiges Polybutadien" verwendet.

Die Angabe des Mw bezieht sich hierbei auf das Polybutadien inklusive der Organosilicium-Modifizierung.

Bevorzugt ist das flüssige Polybutadien mit zumindest einem Rest gemäß Formel I) modifiziert:

I) (R¹R²R³) Si-

wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polybutadiens angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

Mit einer derartigen Modifizierung ergeben sich besonders gute Rollwiderstands- und Reißeigenschaftsindikatoren.

Gemäß einer bevorzugten Ausführungsform der Erfindung sind alle Gruppen R¹, R², R³ Alkoxygruppen. Besonders bevorzugt ist wenigstens eine der drei Gruppen R¹, R², R³ eine Ethoxygruppe. Ganz besonders bevorzugt handelt es sich bei allen drei Gruppen R¹, R², R³ um jeweils eine Ethoxygruppe (abgekürzt mit OEt). Dies gilt für alle genannten Ausführungsformen der Erfindung inkl. den Formeln II) und III).

Gemäß einer bevorzugten Ausführungsform der Erfindung ist der Rest gemäß Formel I) nicht direkt, sondern über eine Brücke angebunden. Bevorzugt ist damit ein Rest inkl. Brücke gemäß Formel II) an die Polymerkette des Polybutadiens angebunden.

II) (R¹R²R³) Si-Y-X-

wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester, ist.
Unter Urethan wird im Rahmen der vorliegenden Erfindung eine Gruppierung -N(H)-C(O)-O- verstanden.

Gemäß einer besonders vorteilhaften Ausführungsform der Erfindung ist das flüssige Polybutadien mit einem Rest gemäß Formel II) modifiziert, bei dem X = Propyl (n = 3) und Y = Urethan (-N(H)-C(O)-O-) und die Reste R¹, R² und R³ alle eine Ethoxygruppe (OEt) sind.
Hiermit ergibt sich als bevorzugte Strukturformel des organosilicium-modifizierten flüssigen Polybutadiens die Formel III)

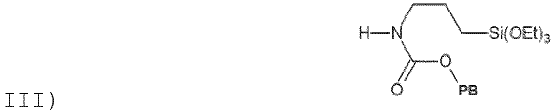

Hierbei ist PB = Polybutadien und stellt damit die Polymerkette der Monomere dar.

Das flüssige Polybutadien weist ein Mw von 500 bis 12000 g/mol auf. Hiermit ergeben sich sehr gute Eigenschaften hinsichtlich des Rollwiderstandes sowie der Verarbeitbarkeit, da Mw unter 12000 eine Flüssigdosierung aufgrund der niedrigen Viskositäten erlauben.
Besonders bevorzugt weist das flüssige Polybutadien ein Mw von 1000 bis 9000g/mol auf. Hiermit ergeben sich wiederum besonders gute Eigenschaften hinsichtlich des Rollwiderstandes sowie der Verarbeitbarkeit.

Das flüssige Polybutadien weist bevorzugt eine Glasübergangstemperatur T_{g} gemäß DSC (Apparat Mettler Toledo; Messung von +70 °C bis -150 °C, Temperaturänderung von 10 K/min; Bestimmung des Glasübergangspunktes analog ISO-FDIS 11357-2) von -85 bis -30 °C, besonders bevorzugt -60 bis -40 °C auf. Hiermit ergeben sich besonders gute Rollwiderstandsindikatoren.

Das flüssige Polybutadien weist bevorzugt einen Vinyl-Gehalt (Gehalt an 1,2-gebundenem Butadien, bezogen auf die Monomere der Polymerkette des Polybutadiens) von 40 bis 75 % auf, besonders bevorzugt 50 bis 75 %, ganz besonders bevorzugt 55 bis 70 %.

Das flüssige Polybutadien weist bevorzugt einen 1,4-trans-Anteil von 5 bis 30 % (bezogen auf die Monomere der Polymerkette des Polybutadiens), besonders bevorzugt von 10 bis 25 %, auf.

Der cis-Anteil des flüssigen Polybutadiens beträgt bevorzugt 5 bis 30 % (bezogen auf die Monomere der Polymerkette des Polybutadiens), besonders bevorzugt 10 bis 25 %.
Die Merkmale der Mikrostruktur wie 1,4-trans-Anteil, Vinyl-Gehalt, cis-Anteil werden nach erfolgter Synthese des flüssigen Polybutadiens (s. unten) mittels ¹³C-NMR (90,5628 MHz; Relaxationsagens Cr(acac)₃; Lösungsmittel CDCl₃, Bruker 360 MHz) bestimmt.
Das flüssige Polybutadien kann beispielsweise durch Reaktion von 3-Isocyant-n-Propyl-Triethoxysilan mit endständig Hydroxy-funktionalisiertem Polybutadien (z.B. Krasol LBH-P3000) wie in der US 2002/0082333 A1 beschrieben hergestellt werden.
Die Menge des flüssigen Polybutadiens beträgt 1 bis 35 phr, bevorzugt 2 bis 17 phr, besonders bevorzugt 5 bis 15 phr. Insbesondere mit einer Menge von 2 bis 17 phr, besonders bevorzugt 5 bis 15 phr, wird die Aufgabe der Verbesserung im Zielkonflikt aus Rollwiderstand und Reißeigenschaften und einer guten Verarbeitbarkeit besonders gut gelöst.

Die erfindungsgemäße Kautschukmischung enthält 70 bis 100 phr, zumindest eines natürlichen (NR) und/oder synthetischen Polyisoprens (IR), bevorzugt mit einem Gewichtsmittel Mw des Molekulargewichts gemäß GPC von 250000 bis 5000000 g/mol.
Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlichen Polyisoprene mit einem oder mehreren synthetischen Polyisoprene denkbar.

Für den Fall, dass die Kautschukmischung weniger als 100 phr NR und/oder IR enthält, enthält sie wenigstens einen weiteren Dienkautschuk mit einem im Gegensatz zum flüssigen Polybutadien vergleichsweise hohen Molekulargewicht und zwar einem Gewichtsmittel Mw des Molekulargewichts gemäß GPC von 250000 bis 5000000 g/mol.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. NR und IR zählen ebenfalls zu den Dienkautschuken.
Bei dem weiteren Dienkautschuk handelt es sich um Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.
Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Bevorzugt handelt es sich bei dem oder den weiteren Dienkautschuk(en) jedoch um Polybutadien (Butadien-Kautschuk) und/oder Styrol-Butadien-Copolymer (Styrol-Butadien-Kautschuk), besonders bevorzugt Butadien-Kautschuk.
Gemäß einer bevorzugten Weiterbildung der Erfindung enthält die Kautschukmischung 1 bis 50 phr wenigstens eines Butadien-Kautschuks und/oder Styrol-Butadien-Copolymers, bevorzugt 1 bis 50 phr wenigstens eines Butadien-Kautschuks, und 50 bis 99 phr zumindest eines natürlichen und/oder synthetischen Polyisoprens.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.
Gemäß einer bevorzugten Ausführungsform der Erfindung wird als weiterer Dienkautschuk wenigstens ein SSBR mit einer Glasübergangstemperatur T_{g} von
kleiner als -30 °C eingesetzt, womit sich besonders gute Rollwiderstandsindikatoren ergeben.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit den oben beim Styrol-Butadien-Kautschuk genannten Modifizierungen und Funktionalisierungen endgruppenmodifiziert und/oder entlang der Polymerketten funktionalisiert sein.

Erfindungsgemäß enthält die Kautschukmischung 20 bis 90 phr zumindest einer Kieselsäure. Bevorzugt enthält die Kautschukmischung 30 bis 80 phr zumindest einer Kieselsäure. Gemäß einer besonders bevorzugten Ausführungsform der Erfindung enthält die Kautschukmischung 50 bis 70 phr zumindest einer Kieselsäure.

Die Begriffe "Kieselsäure" und "Silika" werden im Rahmen der vorliegenden Erfindung, wie auch in der Fachwelt üblich, synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTMD 3765) von 30 bis 400 m²/g, bevorzugt von 60 bis 250 m²/g, besonders bevorzugt von 120 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z.B. Zeosil^{®} 1165 MP der Firma Solvay), zum Einsatz kommen.

Gemäß einer bevorzugten Weiterbildung der Erfindung enthält die Kautschukmischung 90 bis 100 Gew.-% (bezogen auf die Gesamtmenge an enthaltener Kieselsäure) wenigstens einer Kieselsäure mit einer BET-Oberfläche größer oder gleich 120 m²/g, bevorzugt von 120 bis 230 m²/g.
Kautschukmischungen enthaltend 90 bis 100 Gew.-% Kieselsäure(n) mit einer BET-Oberfläche größer oder gleich 120 zeigen einen weitaus geringeren Abrieb als Kautschukmischungen enthaltend Kieselsäuren, die eine geringere BET-Oberfläche besitzen. Eine Mindestabriebresistenz ist auch in der Base erwünscht, da gegen Ende des Reifenlebens die Base-Mischung in Kontakt mit der Straße kommen kann. Zudem ist es im Werk für den Fall der Aufarbeitung der Base-Mischung in einer Cap-Mischung vorteilhaft, einen dem Füllstoff in den Cap-Mischungen gleichen oder zumindest ähnlichen Füllstoff in der Base zu verwenden.

Die erfindungsgemäße Kautschukmischung ist gemäß einer bevorzugten Ausführungsform frei von Ruß, d.h. sie enthält 0 phr Ruß.
Gemäß einer weiteren Ausführungsform der Erfindung kann sie ferner wenigstens einen Ruß in Mengen von 0,1 bis 30 phr, bevorzugt 0,1 bis 10 phr, besonders bevorzugt 0,1 bis 5 phr, enthalten. Falls Ruß enthalten ist, ist eine geringe Menge von 0,1 bis 5 phr zwecks verbesserter Rollwiderstandsindikatoren besonders bevorzugt.
Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.
Hiermit werden für die Anwendung im Fahrzeugreifen besonders gute Rollwiderstandsindikatoren (Rückprallelastizität bei 70 °C) und Reißeigenschaften erzielt.

Die erfindungsgemäße Kautschukmischung kann neben Kieselsäure und ggf. Ruß noch weitere bekannte polare und/oder unpolare Füllstoffe, wie Alumosilicate, Kreide, Stärke, Magnesiumoxid, Titandioxid oder Kautschukgele, enthalten.
Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar.

Auch Graphit und Graphene sowie sogenannte "carbon-silica dual-phase filler" sind als Füllstoff denkbar.
Zinkoxid gehört im Rahmen der vorliegenden Erfindung nicht zu den Füllstoffen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261^{®} der Firma Evonik erhältlich, welches z.B. in der DE 102006004062 A1 beschrieben ist.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.
Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Gemäß einer besonders bevorzugten Ausführungsform enthält die Kautschukmischung wenigstens ein Silan-Kupplungsagens wie oben beschrieben, wobei das Organosilicium-modifizierte flüssige Polybutadien im Rahmen der vorliegenden Erfindung nicht hierzu zählt. Gemäß dieser bevorzugten Ausführungsform der Erfindung enthält die Kautschukmischung somit das Organosilicium-modifizierte flüssige Polybutadien und wenigstens ein Silan-Kupplungsagens, welches bevorzugt ausgewählt ist aus der Gruppe enthaltend 3-(Octanoylthio)-1-Propyl-Triethoxysilan und 3,3'-Bis(triethoxysilylpropyl)tetrasulfid (TESPT) und 3,3'-Bis(triethoxysilylpropyl)disulfid (TESPD). Bei den Triethoxysilylpropylsulfiden ist wie oben beschrieben auch ein Gemisch mit anderen Sulfiden denkbar, wobei ein Anteil von S₂-Silan (Bis(triethoxysilylpropyl)disulfid) von 40 bis 100 Gew.-% bezogen auf die Gesamtmenge an Silan bevorzugt ist. Hiermit ergeben sich besonders gute Rollwiderstandsindikatoren in Kombination mit sehr guten sonstigen Reifeneigenschaften sowie eine gute Verarbeitbarkeit der Kautschukmischung.

Die Menge an zugegebenem Silan (außer dem flüssigen Polybutadien) beträgt bevorzugt 2 bis 10 phr, besonders bevorzugt 2 bis 7 phr, ganz besonders bevorzugt 3 bis 5,5 phr.

Die erfindungsgemäße Kautschukmischung enthält 0,5 bis 8 phr, bevorzugt 1 bis 5 phr wenigstens eines Klebharzes. Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Gemäß einer bevorzugten Ausführungsform enthält die erfindungsgemäße Kautschukmischung keinen Weichmacher (außer dem genannten flüssigen Polybutadien).
Gemäß einer weiteren Ausführungsform der Erfindung ist es vorteilhaft, wenn die Kautschukmischung wenigstens einen Weichmacher enthält, wobei die Gesamtmenge an Weichmacher bevorzugt 1 bis 10 phr, besonders bevorzugt 2 bis 7 phr, ganz besonders bevorzugt 4 bis 6 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Rollwiderstandsindikatoren.
Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze, die nicht zu den oben genannten Klebharzen zählen, oder Flüssig-Polymere, die nicht dem oben beschriebenen modifizierten flüssigen Polybutadien entsprechen und deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese ebenfalls nicht als Kautschuk in die Berechnung der Zusammensetzung der Polymermatrix ein.
Der Weichmacher ist bevorzugt ausgewählt aus der Gruppe bestehend aus den oben genannten Weichmachern. Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z.B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 1 bis 8 phr, besonders bevorzugt 1,5 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z.B. Cobalt-Salze und Verstärkerhärze (z.b. Resorcin-HMMM/HMT) zum Einsatz in Body-Mischungen, insbesondere Gummierungsmischungen, enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden.
Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen
Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5. Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).
Hiermit werden sehr gute Abrieb- und Reißeigenschaften der erfindungsgemäßen Kautschukmischung erzielt.
Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren^{®}, Duralink^{®} und Perkalink^{®} begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.
Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, wie dem Laufstreifen und/oder der Seitenwand und/oder in wenigstens einem inneren Bauteil.
Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage bezeichnet.
Bevorzugt wird die erfindungsgemäße Kautschukmischung jedoch in Laufstreifen von Fahrzeugreifen verwendet, bevorzugt hierbei wenigstens in der Base von Laufstreifen mit Cap/Base-Konstruktion.

Zur Verwendung in Fahrzeugreifen wird die Mischung als Fertigmischung vor der Vulkanisation bevorzugt in die Form eines Laufstreifens, bevorzugt wenigstens in die Form einer Laufstreifenbase, gebracht und bei der Herstellung des Fahrzeugreifenrohlings wie bekannt aufgebracht. Der Laufstreifen, bevorzugt wenigstens die Laufstreifenbase, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.
Die Herstellung der erfindungsgemäßen Kautschukmischung zur Verwendung als Body- Mischung in Fahrzeugreifen erfolgt wie bereits für den Laufstreifen beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in der Tabelle 1 zusammengefasst sind, näher erläutert werden.
Die Vergleichsmischungen sind mit V, die erfindungsgemäßen Mischungen sind mit E gekennzeichnet.

Das endständig Organosilicium-modifizierte flüssige Polybutadien wurde durch Reaktion von 3-Isocyant-n-Propyl-Triethoxysilan mit endständig Hydroxy-funktionalisiertem Polybutadien (Krasol LBH-P3000), analog zu der Beschreibung in der US 2002/0082333 A1, Absatz [0053], hergestellt, wobei 155 g 3-Isocyant-n-Propyl-Triethoxysilan pro kg Krasol LBH-P3000 verwendet wurden. Die Reaktion wurde bei 80 °C in einem 5L (Liter) Reaktor durchgeführt.

Die Mischungsherstellung erfolgte nach dem in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften mit den im Folgenden angegebenen Testverfahren ermittelt.
- Mooney-Viskosität (ML1+4), gemäß ASTM D1646 (Mooney-Einheiten abgekürzt M.E.)
- Shore-A-Härte bei Raumtemperatur (RT) gemäß DIN ISO 7619-1
- Rückprallelastizität (Rückpr.) bei RT und 70 °C gemäß DIN 53 512
- dynamischer Speichermodul E' bei 55 °C gemäß ISO 4664-1 bei 0,15 % Dehnung und bei 8% Dehnung sowie maximaler Verlustfaktor Tangens delta (tan d max) gemäß ISO 4664-1
- Hochgeschwindigkeitsbruchdehnung als Reißenergie pro verformtem Volumen bei Raumtemperatur gemäß High Speed Tear Energy Test nach DIN EN 10 045 (HSTE)
- Zugfestigkeit, Bruchdehnung und Spannungswert bei 100% (Modul 100) statischer Dehnung bei Raumtemperatur gemäß DIN 53 504

### Verwendete Substanzen

a) NR: Naturkautschuk TSR
b) Butadien-Kautschuk, hoch-cis Co-BR, Mw = 550000 g/mol, cis-Gehalt >= 95 %
c) SBR: SSBR NS 612, Fa. Nippon Zeon
d) Kieselsäure Ultrasil^{®} VN3, Fa. Evonik
e) flüssiges Polybutadien, organosilicium-modifiziert erhalten wie oben beschrieben,
   Vinyl-Gehalt = 63,3 %, trans-Anteil = 17,5 %, cis-Anteil = 19 %, T_{g} = - 56 °C,
   Mw = 7400 g/mol Mn = 6300 g/mol, Polymer mit Modifizierung gemäß Formel III)
f) MES
g) Phenolharz
h) Zusatzstoffe: 4,6 phr Alterungsschutzmittel (DTPD, 6PPD, TMQ), 0,5 phr Ozonschutzwachs, 3 phr Zinkoxid (ZnO), 3 phr Stearinsäure
i) S₂-Silan: TESPD, JH-S75, Fa. Jingzhou Jianghan Fine Chemical
j) NXT-Silan: 3-(Octanoylthio)-1-Propyl-Triethoxysilan, Fa. Momentive
k) Beschleuniger: 2,1 phr DPG, 3,2 phr TBBS
l) Schwefel: 1,95 phr unlöslicher Schwefel OT33 (33,3333 Gew.-% Öl, 66,6666 Gew.-% unlöslicher Schwefel), 1,3 phr löslicher Schwefel
m) Vulkanisationsverzögerer: CTP (Cyclohexylthiophthalimid)

**Tabelle 1**

| **Bestandteile** | **Einheit** | **V1** | **V2** | **E1** | **E2** | **E3** | **E4** | **E5** | **E6** |
|---|---|---|---|---|---|---|---|---|---|
| NR ^{a)} | phr | 75 | 25 | 75 | 75 | 75 | 100 | 75 | 75 |
| BR ^{b)} | phr | 25 | 75 | 25 | 25 | 25 | - | - | 25 |
| SBR ^{c)} | phr | - | - | - | - | - | - | 25 | - |
| Kieselsre ^{d)} | phr | 60 | 60 | 60 | 60 | 60 | 60 | 60 | 60 |
| fl. PB ^{e)} | phr | - | 10 | 2 | 5 | 10 | 10 | 10 | 10 |
| Öl ^{f)} | phr | 5 | 5 | 5 | 5 | 5 | 5 | 5 | 5 |
| Klebharz ^{g)} | phr | 2 | 2 | 2 | 2 | 2 | 2 | 2 | 2 |
| Zusatzstoffe ^{h)} | phr | 11 | 11 | 11 | 11 | 11 | 11 | 11 | 11 |
| Silan ⁱ⁾ | phr | 4,5 | 4,5 | 4,5 | 4,5 | 4,5 | 4,5 | 4,5 | - |
| Silan ^{j)} | phr | - | - | - | - | - | - | - | 6 |
| Beschl. ^{k)} | phr | 5,3 | 5,3 | 5,3 | 5,3 | 5,3 | 5,3 | 5,3 | 5,3 |
| S ^{l)} | phr | 3,3 | 3,3 | 3,3 | 3,3 | 3,3 | 3,3 | 3,3 | 3,3 |
| Verz. ^{m)} | phr | 0,3 | 0,3 | 0,3 | 0,3 | 0,3 | 0,3 | 0,3 | 0,3 |
| | | | | | | | | | |

| **Physikalische Eigenschaften** | | | | | | | | | |
|---|---|---|---|---|---|---|---|---|---|
| Viskosität | M.E. | 59 | 64 | 59 | 56 | 57 | 58 | 59 | 52 |
| Härte RT | Shore A | 73 | 74 | 73 | 72 | 72 | 70 | 71 | 70 |
| Rückpr. RT | % | 54 | 64 | 55 | 55 | 57 | 55 | 56 | 59 |
| Rückpr. 70 °C | % | 65 | 73 | 67 | 69 | 71 | 71 | 72 | 73 |
| Zugfestigkeit | MPa | 16 | 9 | 16 | 18 | 16 | 20 | 14 | 16 |
| M100 | MPa | 4 | 5 | 4 | 5 | 5 | 5 | 5 | 4 |
| Bruchdehnung | % | 317 | 199 | 318 | 338 | 302 | 352 | 263 | 334 |
| E' (8 %) | MPa | 8,4 | 10,4 | 8,7 | 9,0 | 9,1 | 8,6 | 9,3 | 8,2 |
| tan d (max) | | 0,104 | 0,067 | 0,095 | 0,082 | 0,06 | 0,058 | 0,062 | 0,056 |
| HSTE | MJ/m³ | 2,1 | 2,1 | 2,7 | 2,6 | 2,2 | 2,9 | 2,5 | 3,0 |

Wie Tabelle 1 zu entnehmen ist, wird mit den erfindungsgemäßen Kautschukmischungen mit einer hohen Menge an Naturkautschuk und dem flüssigen Polybutadien eine Verbesserung im Zielkonflikt aus Rollwiderstandsindikatoren (möglichst hohe Rückprallelastizität bei 70 °C, möglichst geringer Verlustfaktor tan d max), Reißeigenschaften (möglichst hohe: Zugfestigkeit, Bruchdehnung, M100, E', HSTE) und der Verarbeitbarkeit (möglichst geringe Mooney-Viskosität) erzielt.

## Patentansprüche

1. Schwefelvernetzbare Kautschukmischung enthaltend
- 70 bis 100 phr zumindest eines natürlichen und/oder synthetischen Polyisoprens und
- 20 bis 90 phr zumindest einer Kieselsäure und
- 1 bis 35 phr zumindest eines flüssigen Polybutadiens, welches endständig organosilicium-modifiziert ist, und ein Gewichtsmittel Mw des Molekulargewichts gemäß GPC von 500 bis 12000 g/mol aufweist, und
- 0,5 bis 8 phr zumindest eines Klebharzes.

2. Kautschukmischung nach Anspruch 1, **dadurch gekennzeichnet, dass** das flüssige Polybutadien mit zumindest einem Rest gemäß Formel I) modifiziert ist:
I) (R¹R²R³) Si-
wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polybutadiens angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

3. Kautschukmischung nach Anspruch 2, **dadurch gekennzeichnet, dass** der Rest gemäß Formel I) nicht direkt, sondern über eine Brücke gemäß Formel II) angebunden ist:
II) (R¹R²R³) Si-Y-X-,
wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester.

4. Kautschukmischung nach Anspruch 3, **dadurch gekennzeichnet, dass** das organosilicium-modifizierte flüssige Polybutadien eine Struktur gemäß Formel III) aufweist:

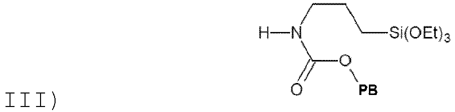

5. Kautschukmischung nach zumindest einem der vorhergehenden Ansprüche, **dadurch gekennzeichnet, dass** das flüssige Polybutadien mit endständiger Organosilizium-Modifizierung eine Glasumwandlungstemperatur T_{g} gemäß DSC von -85 bis -30 °C aufweist.

6. Kautschukmischung nach zumindest einem der vorhergehenden Ansprüche, **dadurch gekennzeichnet, dass** sie 2 bis 17 phr des flüssigen Polybutadiens, welches endständig organosilicium-modifiziert ist, enthält.

7. Kautschukmischung nach zumindest einem der vorhergehenden Ansprüche, **dadurch gekennzeichnet, dass** sie 90 bis 100 Gew.-% (bezogen auf die Gesamtmenge an enthaltener Kieselsäure) wenigstens einer Kieselsäure mit einer BET-Oberfläche größer oder gleich 120 m²/g enthält.

8. Fahrzeugreifen, der wenigstens ein Bauteil aufweist, welches zumindest zum Teil aus einer mit Schwefel vulkanisierten Kautschukmischung nach zumindest einem der Ansprüche 1 bis 7 besteht.

9. Fahrzeugreifen nach Anspruch 8, **dadurch gekennzeichnet, dass** es sich bei dem Bauteil zumindest um die Base eines Laufstreifens mit Cap/Base-Konstruktion handelt.

## Claims

1. Sulfur-crosslinkable rubber mixture comprising
- from 70 to 100 phr of at least one natural and/or synthetic polyisoprene and
- from 20 to 90 phr of at least one silica and
- from 1 to 35 phr of at least one liquid polybutadiene,
which has been terminally organosilicon-modified, and the weight-average molar mass M_{W} of which according to GPC is from 500 to 12 000 g/mol and
- from 0.5 to 8 phr of at least one adhesive resin.

2. Rubber mixture according to Claim 1, **characterized in that** the liquid polybutadiene has been modified with at least one moiety according to formula I):
I) (R¹R²R³) Si-
where R¹, R² and R³ in the structures can be identical or different and can be selected from linear or branched alkoxy, cycloalkoxy, alkyl, cycloalkyl or aryl groups having from 1 to 20 carbon atoms, and
where the moiety according to formula I) has linkage to the polymer chain of the polybutadiene directly or by way of a bridge, and where the bridge is composed of a saturated or unsaturated carbon chain which can also comprise cyclic and/or aliphatic and/or aromatic elements, and also, in or on the chain, heteroatoms.

3. Rubber mixture according to Claim 2, **characterized in that** the moiety according to formula I) does not have direct linkage but instead has linkage by way of a bridge according to formula II):
II) (R¹R²R³) Si-Y-X-,
where in formula II) Y is an alkyl chain (-CH₂)ₙ-,
where n = from 1 to 8 and X is a functional group selected from the group consisting of ester, ether, urethane, urea, amine, amide, thioether, thioester.

4. Rubber mixture according to Claim 3, **characterized in that** the organosilicon-modified liquid polybutadiene has a structure according to formula III) :

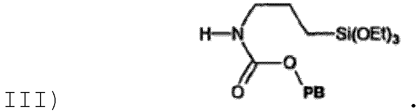

5. Rubber mixture according to at least one of the preceding claims, **characterized in that** the glass transition temperature T_{g} of the liquid polybutadiene with terminal organosilicon modification according to DSC is from -85 to -30°C.

6. Rubber mixture according to at least one of the preceding claims, **characterized in that** it comprises from 2 to 17 phr of the liquid polybutadiene which has been terminally organosilicon-modified.

7. Rubber mixture according to at least one of the preceding claims, **characterized in that** it comprises from 90 to 100% by weight (based on the total quantity of silica present) of at least one silica with BET surface area greater than or equal to 120 m²/g.

8. Tyre which has at least one component composed at least in part of a sulfur-vulcanized rubber mixture according to at least one of Claims 1 to 7.

9. Tyre according to Claim 8, **characterized in that** the component is at least the base of a tread with cap/base structure.

## Revendications

1. Mélange de caoutchouc réticulable au soufre, contenant :
- 70 à 100 pce d'au moins un polyisoprène naturel et/ou synthétique, et
- 20 à 90 pce d'au moins une silice, et
- 1 à 35 pce d'au moins un polybutadiène liquide, qui est modifié par un organosilicium aux extrémités, et présente une moyenne en poids Mw du poids moléculaire par CPG de 500 à 12 000 g/mol, et
- 0,5 à 8 pce d'au moins une résine adhésive.

2. Mélange de caoutchouc selon la revendication 1, **caractérisé en ce que** le polybutadiène liquide est modifié avec au moins un radical de formule I) :
I) (R¹R²R³) Si-
R¹, R², R³ pouvant être identiques ou différents dans les structures et pouvant être choisis parmi les groupes alcoxy, cycloalcoxy, alkyle, cycloalkyle ou aryle linéaires ou ramifiés de 1 à 20 atomes de carbone, et le radical selon la formule I) étant relié directement ou par un pont à la chaîne polymère du polybutadiène, et le pont étant constitué par une chaîne carbonée saturée ou insaturée, qui peut également contenir des éléments cycliques et/ou aliphatiques et/ou aromatiques, ainsi que des hétéroatomes dans ou sur la chaîne.

3. Mélange de caoutchouc selon la revendication 2, **caractérisé en ce que** le radical selon la formule I) n'est pas relié directement, mais plutôt par le biais d'un pont selon la formule II) :
II) (R¹R²R³) Si-Y-X-,
dans la formule II), Y étant une chaîne alkyle (-CH₂)ₙ-avec n = 1 à 8 et X étant un groupe fonctionnel qui est choisi dans le groupe constitué par ester, éther, uréthane, urée, amine, amide, thioéther, thioester.

4. Mélange de caoutchouc selon la revendication 3, **caractérisé en ce que** le polybutadiène liquide modifié par un organosilicium présente une structure selon la formule III) :

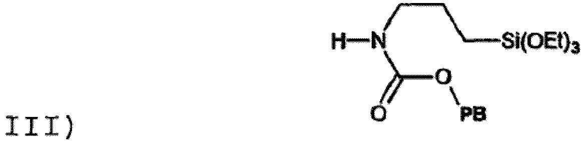

5. Mélange de caoutchouc selon au moins l'une quelconque des revendications précédentes, **caractérisé en ce que** le polybutadiène liquide comprenant une modification organosilicium aux extrémités présente une température de transition vitreuse T_{g} par DSC de -85 à - 30 °C.

6. Mélange de caoutchouc selon au moins l'une quelconque des revendications précédentes, **caractérisé en ce qu'**il contient 2 à 17 pce du polybutadiène liquide, qui est modifié par un organosilicium aux extrémités.

7. Mélange de caoutchouc selon au moins l'une quelconque des revendications précédentes, **caractérisé en ce qu'**il contient 90 à 100 % en poids (par rapport à la quantité totale de silice contenue) d'au moins une silice ayant une surface BET supérieure ou égale à 120 m²/g.

8. Pneu de véhicule automobile, qui comprend au moins un composant qui est constitué au moins en partie par un mélange de caoutchouc vulcanisé avec du soufre selon au moins l'une quelconque des revendications 1 à 7.

9. Pneu de véhicule automobile selon la revendication 8, **caractérisé en ce que** le composant est au moins la base d'une bande de roulement de construction chape/base.
